(19) Europäisches Patentamt / European Patent Office / Office européen des brevets

(11) **EP 3 171 476 B1**

(12) **EUROPEAN PATENT SPECIFICATION**

(45) Date of publication and mention
of the grant of the patent:
**05.10.2022 Bulletin 2022/40**

(21) Application number: **15895149.1**

(22) Date of filing: **14.08.2015**

(51) International Patent Classification (IPC):
*H02J 1/10* (2006.01)     *H02H 7/28* (2006.01)
*H02H 3/02* (2006.01)     *H02H 3/033* (2006.01)
*H02H 3/05* (2006.01)     *H02H 7/26* (2006.01)

(52) Cooperative Patent Classification (CPC):
**H02H 3/02; H02H 3/033; H02H 3/05; H02H 7/268;
H02H 7/28; H02J 1/10**

(86) International application number:
**PCT/CN2015/086975**

(87) International publication number:
**WO 2017/024598 (16.02.2017 Gazette 2017/07)**

(54) **MMC-HVDC SYSTEM, AND DIRECT-CURRENT SIDE ISOLATION DEVICE AND ISOLATION METHOD THEREFOR**

MMC-HVDC-SYSTEM UND ISOLIERUNGSVORRICHTUNG UND ISOLIERUNGSVERFAHREN FÜR GLEICHSTROMSEITE DAVON

SYSTÈME DE MMC-CCHT, ET DISPOSITIF D'ISOLATION DU CÔTÉ À COURANT CONTINU ET SON PROCÉDÉ D'ISOLATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.08.2015 CN 201510483656**

(43) Date of publication of application:
**24.05.2017 Bulletin 2017/21**

(73) Proprietors:
• **State Grid Corporation of China (SGCC)
Beijing 100031 (CN)**
• **Electric Power Research Institute of State Grid
Zhejiang Electric Power Company
Hangzhou, Zhejiang 310014 (CN)**

(72) Inventors:
• **XU, Feng
Hangzhou
Zhejiang 310014 (CN)**
• **QIU, Peng
Hangzhou
Zhejiang 310014 (CN)**
• **LU, Yi
Hangzhou
Zhejiang 310014 (CN)**

• **HUANG, Xiaoming
Hangzhou
Zhejiang 310014 (CN)**
• **LU, Chengyu
Hangzhou
Zhejiang 310014 (CN)**
• **LOU, Boliang
Hangzhou
Zhejiang 310014 (CN)**
• **HUANG, Hongyang
Hangzhou
Zhejiang 310014 (CN)**
• **HUA, Wen
Hangzhou
Zhejiang 310014 (CN)**

(74) Representative: **Detken, Andreas
Isler & Pedrazzini AG
Giesshübelstrasse 45
Postfach 1772
8027 Zürich (CH)**

(56) References cited:
WO-A1-2012/116738     CN-A- 104 242 265
CN-A- 104 702 256     CN-A- 104 767 170
CN-A- 104 767 185     CN-A- 104 767 185
US-A1- 2014 313 641     US-A1- 2015 022 928

EP 3 171 476 B1

**Description**

**FIELD**

The present disclosure relates to the technical field of electric power system control, and in particular to an MMC-HVDC system and an isolation device and an isolation method for a direct current side of the MMC-HVDC system.

**BACKGROUND**

In order to solve the problem of new energy source grid connection and consumption, the high-voltage direct current (HVDC) technology based on a voltage source converter (VSC) and the direct current power grid technology have been a focus for academic study. As compared with the conventional alternating current power transmission technology and the high voltage direct current technology based on a power grid commutation converter, the HVDC technology based on VSC has advantages of a low line loss, a great transmission capacity and a long transmission distance and so on, and has no problem on stability of system synchronous operation, thereby greatly improving a utilization of the renewable energy source.

Among many topology structures, the HVDC technology based on modular multilevel converter (MMC) has obvious advantages. The MMC topology is formed by cascading of sub modules, thereby avoiding direct series-connection of Insulated Gate Bipolar Transistors (IGBT), and greatly reducing the fabricating difficulty. In addition, the HVDC technology based on MMC further has advantages of a low distortion rate of alternating current output voltage harmonics and a low switch loss, thereby being more suitable for constructing a high voltage direct current system and a direct current power grid, and having a wide application prospect.

In a conventional MMC-HVDC project, generally a direct current breaker is provided for an MMC and each direct current line of the MMC-HVDC system, and the MMC or direct current line is isolated from the MMC-HVDC system by turning off the connected direct current breaker. A converter in the existing MMC-HVDC project is generally formed by half bridge sub-modules (HBSM) and the HBSM does not have a capability of self-clearing a direct current fault. Therefore, a direct current breaker may be provided for the MMC and each direct current line of the MMC-HVDC system, and each of the MMC in a fault and/or the direct current lines in a fault is isolated from the MMC-HVDC system by the direct current breaker, to clear a direct current fault of the MMC-HVDC system. However, the direct current breaker is costly, and a large number of direct current breakers are used if providing a direct current breaker for the MMC and each direct current line of the MMC-HVDC system to isolate the MMC and/or direct current line. As the network structure becomes a mainstream, direct current lines used in the MMC-HVDC system are increased gradually, and accordingly the number of direct current breakers to be installed and used is increased, thereby increasing an investment cost of a power grid to a degree and resulting in a high investment cost of the power grid.

The patent application with application No. CN104767185A provides a convertor station having direct current fault clearance capacity and a control method of convertor station, wherein the convertor station comprises a modularized multi-level convertor, a smoothing reactor, a fast shunt isolating switch, a fast on-off switch, a current transfer switch and a line discharge leading circuit.

The patent application with publication No. US9000623B2 provides a HVDC switchyard. Since the switchyard is arranged for interconnecting, and individually disconnecting, sections of an HVDC network, the transfer switches which usually are comprised in DC hybrid circuit breakers may be used as selector switches. In this way, the number of main breakers in the switchyard may be reduced. However, at least two transfer switches need to be switched off when controlling one section of HVDC network disconnect. Besides, the main circuit breaker needs to be connected all the time if there is no need to disconnect any section of the HVDC network.

**SUMMARY**

In view of the above, according to embodiments of the present disclosure, an MMC-HVDC system and an isolation device and an isolation method for a direct current side of the MMC-HVDC system are provided, so as to solve the technical problem in the conventional technology that a direct current breaker is provided for an MMC and each of direct current lines of the MMC-HVDC system to isolate the MMC and/or direct current lines, which increases the investment cost of a power grid to a degree and thereby results in a high investment cost of the power grid.

In order to achieve the above object, technical solutions are provided in the following according to the embodiments of the present disclosure. The invention is set out in the appended set of claims.

An isolation device for a direct current side of an MMC-HVDC system is provided, which includes first isolation switches, current transfer switches, input and output terminals and a direct current breaker, where

one terminal of the direct current breaker is grounded and the other terminal of the direct current breaker is connected to all of the first isolation switches; each of the first isolation switches is connected to one of the input and output terminals via one of the current transfer switches;

each of the current transfer switches includes a first arrester and one of a first IGBT group and an H-bridge group connected to the first arrester in parallel, the first IGBT group includes N first IGBTs each having an anti-parallel diode and N second IGBTs each having an anti-parallel diode, the first IGBTs are connected to the second IGBTs in anti-series, the H-bridge group includes N H-bridge circuits connected in series to each other, and each of the H-bridge circuits includes one first capacitor and four third IGBTs each having an anti-parallel diode; and

$N \geq kU_0/U_1$, $N \in Z$, where k indicates a redundancy factor, $U_0$ indicates a protection level of the first arrester, and $U_1$ indicates an affordable voltage of each of the first IGBTs and the second IGBTs or an affordable voltage of each of the third IGBTs.

The isolation device may further include a second isolation switch, where the direct current breaker is connected to all of the first isolation switches via the second isolation switch.

The isolation device may further include auxiliary discharging branches, where one terminal of each of the auxiliary discharging branches is grounded, and the other terminal of the auxiliary discharging branch is connected to one of the input and output terminal; and each of the auxiliary discharging branches includes an auxiliary discharging switch and a resistor connected in series, the auxiliary discharging switch includes a thyristor group and a second arrester connected in parallel to each other, the thyristor group includes one or more thyristors connected in series to each other, and a current flows from a positive electrode of each of the thyristor to a negative electrode of the thyristor when the auxiliary discharging switch is in a turned-on state.

The direct current breaker may include one or more switching units connected in series to each other, the switching unit may include a third arrester and one of a second IGBT group and a half H-bridge group connected to the third arrester in parallel, the second IGBT group may include one or more fourth IGBTs each having an anti-parallel diode and connected in series to each other, the half H-bridge group may include one or more half H-bridge circuits connected in series to each other, each of the half H-bridge circuits may include one second capacitor and two fifth IGBTs each having an anti-parallel diode, and a current flows from a collector of each of the fourth IGBTs or the fifth IGBTs to an emitter of the fourth IGBT or the fifth IGBT when the direct current breaker is in a turned-on state;

the number of the switching units is denoted as

$$N_s \geq \frac{kk_1 U_{dc}}{U_e}$$ , $N_s \in Z$; and

the number of the third IGBTs is denoted as

$$N_e \geq \frac{U_e}{U_i}$$ , $N_e \in Z$; where

k indicates a redundancy factor, $k_1$ indicates an over voltage affordable factor, $U_{dc}$ indicates a direct current voltage, $U_e$ indicates a protection level of the third arrester, and $U_i$ indicates an affordable voltage of each of the fourth IGBTs or the fifth IGBTs.

The isolation device may further include a direct current bus, where the direct current breaker is connected to all of the first isolation switches via the direct current bus.

An MMC-HVDC system is provided, which includes an MMC, a direct current line and the isolation device described above, where

the MMC and the direct current line each are connected to one of the input and output terminals of the isolation device; and

when the direct current breaker of the isolation device is turned on and the current transfer switch of the isolation device is turned off and the first isolation switch connected to the turned-off current transfer switch is switched off, redundant electrical energy of the MMC-HVDC flows out from the direct current breaker, the MMC or the direct current line corresponding to the turned-off current transfer switch is isolated from the MMC-HVDC system.

The MMC-HVDC system may further include a smoothing reactor, where the MMC is connected to the input and output terminal of the isolation device via the smoothing reactor.

An isolation method for a direct current side of the MMC-HVDC system described above is provided, which includes:

determining an MMC and/or direct current line to be isolated;

turning on the direct current breaker of the isolation device and turning off the current transfer switch corresponding to the MMC and/or direct current line to be isolated; and

switching off the first isolation switch connected to the turned-off current transfer switch after a current flowing through the turned-off current transfer switch is zero, where redundant electrical energy of the MMC-HVDC system flows out from the direct current breaker, and the MMC and/or direct current line to be isolated is isolated from the MMC-HVDC.

After determining the MMC and/or direct current line to be isolated, the isolation method may further include: turning on the auxiliary discharging switch of the auxiliary discharging branch of the isolation device, and turning off the current transfer switch corresponding to the MMC and/or direct current line to be isolated after the auxiliary discharging switch of the auxiliary discharging branch of the isolation switch and the direct current breaker of the isolation device each are turned on.

After the MMC and/or direct current line to be isolated is isolated from the MMC-HVDC system, the isolation method may further include:

turning off the direct current breaker of the isolation device; and

switching off a second isolation switch of the isolation device when a current flowing through the direct breaker is zero.

Based on the above technical solutions, an MMC-HVDC system and an isolation device and isolation method for the MMC-HVDC system are provided according to the embodiments of the present disclosure. The isolation device includes first isolation switches, current transfer switches, input and output terminals and a direct current breaker. One terminal of the direct current breaker is grounded and the other terminal of the direct current breaker is connected to all of the first isolation switches, and each of the first isolation switches is connected to one of the input and output terminals via one of the current transfer switches. In a case that a direct current line or MMC needs to be isolated from the MMC-HVDC system, the MMC or the direct current line is physically isolated from the MMC-HVDC system by turning on the direct current breaker and respectively turning off and switching off the current transfer switch the first isolation switch which are connected to the MMC or direct current line. Also, redundant electronic energy of the system caused due to the physical isolation of the MMC and/or direct current line from the system is discharged and flows out via the direct current breaker, which achieves complete and safe isolation of the MMC or direct current lin from the MMC-HVDC system. The MMC and multiple direct current circuits can be isolated from the MMC-HVDC system by using only one direct current breaker. In addition, the current transfer switch in the isolation device according to the embodiment of the present disclosure includes a first arrester and includes one of a first IGBT group and an H-bridge group connected to the first arrester in parallel. The first IGBT group connected to the first arrester in parallel includes N first IGBTs each having an anti-parallel diode and N second IGBTs each having an anti-parallel diode, where the first IGBTs are connected to the second IGBTs in anti-series. The H-bridge group connected to the first arrester in parallel includes N H-bridge circuits connected in series to each other, and each of the H-bridge circuits includes one first capacitor and four third IGBTs each having an anti-parallel diode, in which

$N \geq kU_0/U_1$, $N \in Z$, where k indicates a redundancy factor, $U_0$ indicates a protection level of the first arrester, and $U_1$ indicates an affordable voltage of the first IGBT and the second IGBT or an affordable voltage of the third IGBT. It follows that, in any of the case that the current transfer switch includes the first arrester and the first IGBT group and the case that the current transfer switch includes the first arrester and the H-bridge group, a cost of each of the current transfer switches connected to the MMC and direct current lines is lower than that of the direct current breaker. Therefore, an investment cost of a power grid can be saved to a degree with the isolation device according to the embodiment of the present disclosure.

BRIEF DESCRIPTION OF THE DRAWINGS

In order to illustrate technical solutions in embodiments of the present disclosure or the conventional technology more clearly, hereinafter drawings to be used in the description of the embodiments or the conventional technology are introduced simply. Apparently, the drawings described in the following only illustrate some embodiments of the present disclosure. Other drawings may also be obtained based on the provided drawings by those skilled in the art without any creative work.

Figure 1 is a schematic structural diagram of an isolation device for a direct current side of an MMC-HVDC system according to an embodiment of the present disclosure;

Figure 2 is a schematic structural diagram of a current transfer switch of an isolation device for a direct current side of an MMC-HVDC system according to an embodiment of the present disclosure;

Figure 3 is a schematic structural diagram of a current transfer switch of an isolation device for a direct current side of an MMC-HVDC system according to an embodiment of the present disclosure;

Figure 4 is a schematic structural diagram of an auxiliary discharging branch of an isolation device for a direct current side of an MMC-HVDC system according to an embodiment of the present disclosure;

Figure 5 is a schematic structural diagram of a direct current breaker of an isolation device for a direct current side of an MMC-HVDC system according to an embodiment of the present disclosure;

Figure 6 is another schematic structural diagram of the direct current breaker of an isolation device for a direct current side of an MMC-HVDC system according to an embodiment of the present disclosure;

Figure 7 is a schematic structural diagram of an MMC-HVDC system according to an embodiment of the present disclosure;

Figure 8 is another schematic structural diagram of the MMC-HVDC system according to an embodiment of the present disclosure;

Figure 9 is a direct current power transmission system using four MMCs according to an embodiment of the present disclosure;

Figure 10 is a flowchart of an isolation method for a direct current side of an MMC-HVDC system according to an embodiment of the present disclosure;

Figure 11 is another flowchart of the isolation method for a direct current side of an MMC-HVDC system according to an embodiment of the present disclosure; and

Figure 12 is a flowchart of a method for further discharging redundant electronic energy in the isolation method for a direct current side of an MMC-HVDC system according to an embodiment of the present disclosure.

## DETAILED DESCRIPTION OF THE EMBODIMENTS

Hereinafter technical solutions in embodiments of the present disclosure are described clearly and completely in conjunction with drawings in the embodiments of the present disclosure. Apparently, the described embodiments are only some rather than all of the embodiments of the present disclosure. Any other embodiments obtained based on the embodiments of the present disclosure by those skilled in the art without any creative work fall within the scope of protection of the present disclosure.

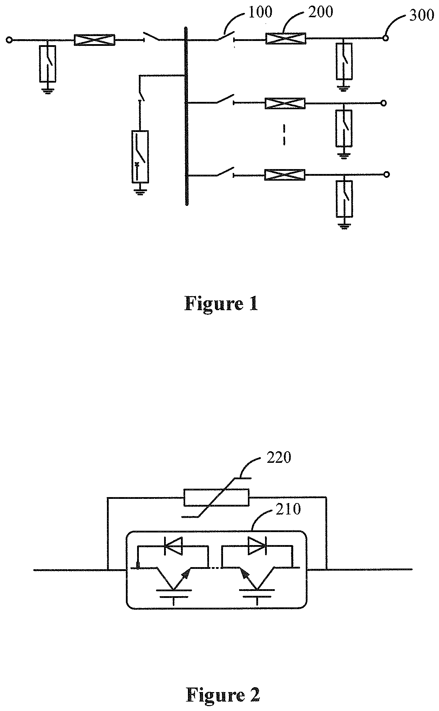

Figure 1 is a schematic structural diagram of an isolation device for a direct current side of an MMC-HVDC system according to an embodiment of the present disclosure. An MMC and multiple direct current circuits can be isolated from the MMC-HVDC system by using only one direct current breaker. In addition, a cost of a current transfer switch connected to the MMC and each direct current line is lower than that of the direct current breaker, thereby saving an investment cost of a power grid to a degree. Referring to Figure 1, an isolation device 1 may include: first isolation switches 100, current transfer switches 200, input and output terminals 300 and a direct current breaker 400.

One terminal of the direct current breaker 400 is grounded, and the other terminal of the direct current breaker 400 is connected to all of the first isolation switches 100. In a case that the MMC-HVDC system works normally, i.e., none of the MMC and direct current lines in the MMC-HVDC system needs to be isolated, the direct current breaker 400 is in a turned-off state. In a case that the MMC and/or direct current lines in the MMC-HVDC system need to be isolated when a fault occurs in the MMC and/or direct current line in the MMC-HVDC system or the MMC and/or direct current line in the MMC-HVDC system need to be overhauled, the direct current breaker 400 is turned-on. When the first isolation switch 100 corresponding to the MMC and/or direct current line to be isolated is switched off, redundant electric energy in the system flows out via the direct current breaker 400, thereby ensuring safe operation of the MMC-HVDC system.

Each of the first isolation switches 100 is connected to one of the input and output terminal 300 via one of the current transfer switch 200. In a case that the MMC-HVDC system works normally, i.e., none of the MMC and direct current lines in the MMC-HVDC system needs to be isolated, the first isolation switches 100 are in a switched-on state, and the current transfer switches 200 are in a turned-on state. In a case that the MMC and/or a direct current line in the MMC-HVDC system need to be isolated, the current transfer switch 200 corresponding to the MMC and/or direct current line to be isolated is turned off. After a current flowing through the turned-off current transfer switch 200 is zero, the first isolation switch 100 connected to the turned-off current transfer current 200 is switched off.

Optionally, the first isolation switch 100 may be an ultrahigh speed mechanical isolation switch which can complete an isolation action in 2ms (millisecond).

Reference is made to Figure 2 which is a schematic structural diagram of a current transfer switch 200 of an isolation device according to an embodiment of the present disclosure. The current transfer switch 200 includes a first IGBT group 210 and a first arrester 220. The first IGBT group 210 is connected to the first arrester 220 in parallel. The first IGBT group 210 includes N first IGBTs each having an anti-parallel diode and N second IGBTs each having an anti-parallel diode, and the first IGBTs are connected to the second IGBTs in anti-series.

When the current transfer switch 200 is in a turned-on state, a current flowing through the current transfer switch 200 flows from IGBT collectors of the first IGBTs to emitters thereof, and flows from positive electrodes of diodes of the second IGBTs to a negative electrode thereof. The current transfer switch 200 being in a turned-on state refers to that each of the IGBTs of the first IGBT group 210 in the current transfer switch 200 is in a turned-on state. Similarly, the current transfer switch 200 being in a turned-off state refers to that each of the IGBTs of the first IGBT group 210 in the current transfer switch 200 is in a turned-off state.

The number N of the first IGBTs and the second IGBTs of the first IGBT group in the current transfer switch 200 meets $N \geq kU_0/U_1$, $N \in Z$, where k indicates a redundancy factor, $U_0$ indicates a protection level of the first arrester 220, and $U_1$ indicates an affordable voltage of each of the first IGBTs and the second IGBTs in the first IGBT group 210.

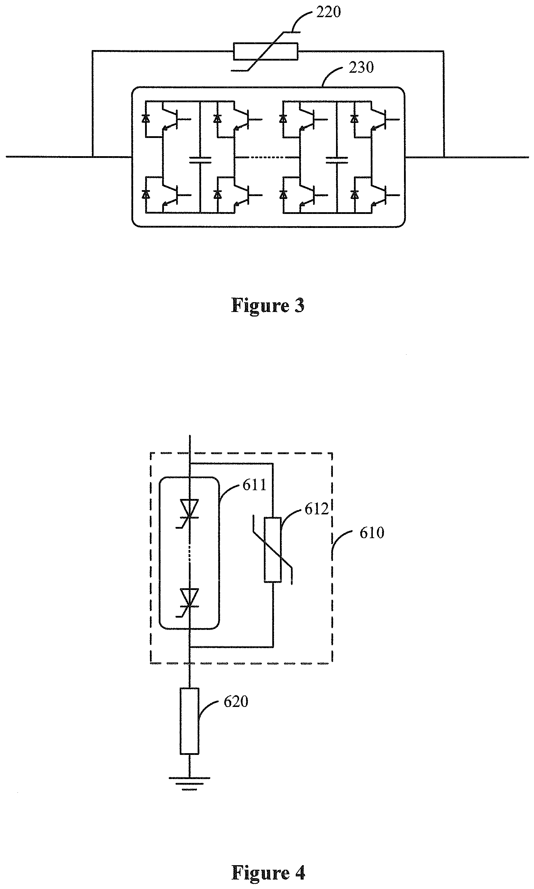

Reference is made to Figure 3 which is another schematic structural diagram of the current transfer switch 200 of the isolation device according to an embodiment of the present disclosure. The current transfer switch 200 includes an H-bridge group 230 and a first arrester 220. The H-bridge group 230 is connected to the first arrester 220 in parallel. The H-bridge group 230 includes N H-bridge circuits 231 connected in series to each other, and each of the H-bridge circuits 231 includes one first capacitor and four third IGBTs each having an anti-parallel diode.

Specifically, the four third IGBTs each having an anti-parallel diode form four vertical legs of the H-bridge circuit 231. That is, each of the H-bridge circuits 231 includes four bridge arms, each of which includes one third IGBT having an anti-parallel diode. The first capacitor functions as the horizontal portion of the H-bridge circuit 231. The current transfer switch 200 being in a turned-on state refers to that each of the IGBTs of the H-bridge group 230 in the current transfer switch 200 is in a turned-on state. Similarly, the current transfer switch 200 being in a turned-off state refers to that each of the IGBTs of the H-bridge group 230 in the current transfer switch 200 is in a turned-off state.

The number N of the third IGBTs in the current transfer switch 200 meets $N \geq kU_0/U_1$, $N \in Z$, where k indicates a redundancy factor, $U_0$ indicates a protection level of the first arrester 220, and $U_1$ indicates an affordable voltage of the third IGBT in the H-bridge circuit 231.

According to the technical solution described above, an MMC-HVDC system and an isolation device and an isolation method for the MMC-HVDC system are provided according to an embodiment of the present disclosure. The isolation device includes first isolation switches, current transfer switches, input and output terminals and a direct current breaker. One terminal of the direct current breaker is grounded, and the other terminal of the direct current breaker is connected to all of the first isolation switches, and each of the first isolation switches is connected to one of the input and output terminals via one of the current transfer switches. In a case that a direct current line or the MMC needs to be isolated from the MMC-HVDC system, the MMC or direct current line is physically isolated from the MMC-HVDC system by turning on the direct current breaker, and respectively turning off and switching off the current transfer switch and the isolation switch which are connected to the MMC or direct current line. Also, redundant electric energy of the system caused due to the physical isolation of the MMC and/or direct current line from the system is discharged and flows out via the direct current breaker, which achieves complete and safe isolation of the MMC or direct current line from the MMC-HVDC system. The MMC and multiple direct current lines can be isolated from the MMC-HVDC system by using only one direct current breaker. In addition, the current transfer switch in the isolation device according to the embodiment of the present disclosure includes a first arrester and one of a first IGBT group and an H-bridge group connected to the first arrester in parallel. The first IGBT group connected to the first arrester in parallel includes N first IGBTs each having an anti-parallel diode and N second IGBTs each having an anti-parallel diode, where the N first IGBTs are connected in anti-series to the N second IGBTs. The H-bridge group connected to the first arrester in parallel includes N H-bridge circuits connected in series to each other, and each of the H-bridge circuits includes one first capacitor and four third IGBTs each having an anti-parallel diode, in which $N \geq kU_0/U_1$, $N \in Z$, where k indicates a redundancy factor, $U_0$ indicates a protection level of the first arrester, and $U_1$ indicates an affordable voltage of the first IGBT and the second IGBT or an affordable voltage of the third IGBT. It follows that, in any of the case that the current transfer switch includes the first arrester and the first IGBT group and the case that the current transfer switch includes the first arrester and the H-bridge group, a cost of each of the current transfer switches connected to the MMC and direct current lines is lower than that of the direct current breaker. Hence the investment cost of the power grid can be saved to a degree with the isolation device according to the embodiment of the present disclosure.

Optionally, referring to Figure 1, the isolation device for a direct current side of the MMC-HVDC system according to the embodiment of the present disclosure may further include a second isolation switch 500. The direct current breaker 400 is connected to all of the first isolation switches 100 via the second isolation switch 500.

In a case that the MMC-HVDC system works normally, i.e., none of the MMC and direct current lines in the MMC-HVDC system needs to be isolated, the second isolation switch 500 is in a switched-on state. In a case that the MMC and/or a direct current line in the MMC-HVDC system need to be isolated, after the MMC and/or direct current line to be isolated is isolated from the MMC-HVDC system, the second isolation switch 500 may be switched off when it is detected that a current flowing through the direct current breaker 400 is 0, such that the redundant current is further discharged and flows out.

Optionally, referring to Figure 1, the isolation device for a direct current side of the MMC-HVDC system according to the embodiment of the present disclosure may further include auxiliary discharging branches 600. One terminal of each of the auxiliary discharging branches 600 is grounded, the other terminal of the auxiliary discharging branch 600 is connected to one of the input and output terminals 300, such that the auxiliary discharging circuit 600 assists the direct current breaker 400 to discharge the redundant electric energy.

Optionally, Figure 4 shows a schematic structural diagram of an auxiliary discharging branch 600 of the isolation device for a direct current side of the MMC-HVDC system according to an embodiment of the present disclosure. Referring to Figure 4, the auxiliary discharging branch 60 may include an auxiliary discharging switch 610 and a resistor 620.

The auxiliary discharging switch 610 and the resistor 620 are connected in series. The auxiliary discharging switch 610 includes a thyristor group 611 and a second arrester 612, and the thyristor group 611 and the second arrester 612 are connected in parallel. The thyristor group 611 includes thyristors, and all of the thyristors are connected in series to each other. The auxiliary discharging switch 610 being in a turned-on state refers to that each of the thyristors in the auxiliary discharging switch 610 is in a turned-on state. Similarly, the auxiliary discharging switch 610 being in a turned-off state refers to that each of the thyristors in the auxiliary discharging switch 610 is in a turned-off state.

In a case that the MMC-HVDC system works normally, i.e., none of the MMC and the direct current lines in the MMC-HVDC system needs to be isolated, the auxiliary discharging switch 610 is in a turned-off state. In a case that the MMC and/or direct current line in the MMC-HVDC system need to be isolated, the auxiliary discharging switch 610 is turned on to be in a turned-on state.

In order to enable the electric energy to flow out from the auxiliary discharging switch 610 smoothly when the auxiliary discharging switch 610 is in a turned-on state, a positive electrode of the thyristor group 611 functions as a high voltage terminal of the auxiliary discharging switch 610 and a negative electrode of the thyristor group 611 functions as a low voltage terminal of the auxiliary discharging switch 610. That is, the positive electrode of each of the thyristors in the thyristor group 611 is connected to a terminal close to the input and output terminal 300, i.e., the terminal away from the grounded terminal; and negative electrode of each of the thyristors in the thyristor group 611 is connected to a terminal away from the input and output terminal 300, i.e., a terminal close to the grounded terminal, such that a current can flow from the positive electrode of the thyristor to the negative electrode of the thyristor when the auxiliary discharging switch 610 is in a turned-on state.

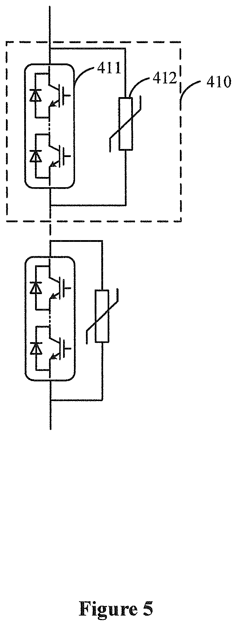

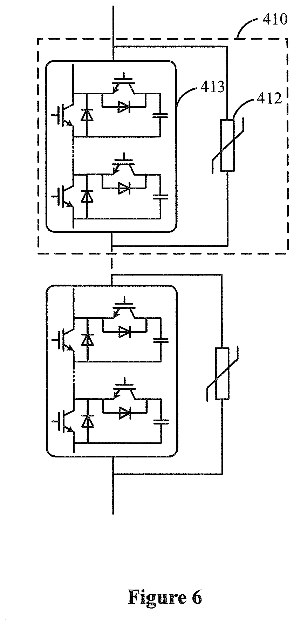

Optionally, Figure 5 and Figure 6 show two schematic structural diagrams of the direct current breaker 400 of the isolation device for a direct current side of the MMC-HVDC system according to embodiments of the present disclosure. Referring to Figure 5 and Figure 6, the direct current breaker 400 may include switching units 410 which are all connected in series to each other.

Optionally, referring to Figure 5, the switching unit 410 may include a second IGBT group 411 and a third arrester 412, where the second IGBT group 411 and the third arrester 412 are connected in parallel. The second IGBT group 411 includes one or more fourth IGBTs each having an anti-parallel diode, where all of the fourth IGBTs each having an anti-parallel diode are connected in series. The direct current breaker 400 being in a turned-on state refers to that all of the IGBTs of the second IGBT group 411 in the direct current breaker 400 are in a turned-on state. The direct current breaker 400 being in a turned-off state refers to that all of the IGBTs of the second IGBT group 411 in the direct current breaker 400 are in a turned-off state.

In order to enable electric energy to flow out from the direct current breaker 400 smoothly when the direct current breaker 400 is in a turned-on state, a collector of the second IGBT group 411 functions as a high voltage terminal of the switching unit 410 and an emitter of the second IGBT group 411 functions as a low voltage terminal of the switching unit 410. That is, collectors of all of the fourth IGBTs in the second IGBT group 411 are connected to a terminal close to the first isolation switch 100, i.e., a terminal away from the grounded terminal; and emitters of all of the fourth IGBTs in the second IGBT group 411 are connected to a terminal away from the first isolation switch 100, i.e., a terminal close to the grounded terminal, such that a current can flow from the collector of the fourth IGBT to the emitter of the fourth IGBT when the direct current breaker 400 is in a turned-on state.

When the direct current breaker 400 is in a turned-on state and a current flows through the direct current breaker 400, all the current flowing through the direct current breaker 400 flows from the collector of the fourth IGBT in the second IGBT group 411 to the emitter thereof without flowing through the diode.

Optionally, referring to Figure 6, the switching unit 410 may include a half H-bridge group 413 and a third arrester 412, where the half H-bridge group 413 and the third arrester 412 are connected in parallel. The half bridge group 413 includes one or more half H-bridge circuits all connected in series to each other.

The half H-bridge group 413 includes one or more half H-bridge circuits connected in series to each other, and each of the half H-bridge circuits includes one second capacitor and two fifth IGBTs each having an anti-parallel diode. Specifically, a collector of one of the two fifth IGBTs functions as a high voltage terminal of the half H-bridge circuit and an emitter of the fifth IGBT functions as a low voltage terminal of the half H-bridge circuit, such that when the direct current breaker 400 is in a turned-on state, a current can flow from the collector of the IGBT to the emitter of the IGBT. The collector of the IGBT is connected to an emitter of the other IGBT, the emitter of the IGBT is connected to a terminal of the second capacitor, and the other terminal of the second capacitor is connected to a collector of the other IGBT.

The direct current breaker 400 being in a turned-on state refers to that all of the IGBTs of the half H-bridge group 413 in the direct current breaker 400 are in a turned-on state. The direct current breaker 400 being in a turned-off state refers to that all of the IGBTs of the half H-bridge group 413 in the direct current breaker 400 are in a turned-off state.

Optionally, the number $N_s$ of the switching units 410 arranged in the direct current breaker 400 may be determined by the formula $N_s \geq \dfrac{kk_1 U_{dc}}{U_e}$ , $N_s \in Z$.

In the formula, k indicates a redundancy factor, $k_1$ indicates an over voltage affordable factor, $U_{de}$ indicates a direct current voltage, and $U_e$ indicates a protection level of the third arrester 412.

Optionally, the number of the third IGBTs each having an anti-parallel diode arranged in the second IGBT group 411 or the number of the half H-bridge circuits arranged in the half H-bridge group 413 may be determined by the formula $N_e \geq \dfrac{U_e}{U_i}$ , $N_e \in Z$.

In the formula, $U_e$ indicates a protection level of the third arrester 412, and $U_i$ indicates an affordable voltage of each of the fourth IGBTs or the fifth IGBTs. Specifically, in a case that the switching unit 410 includes the second IGBT group 411 and the third arrester 412, $U_i$ indicates an affordable voltage of each of the fourth IGBTs. In a case that the switching unit 410 includes the half H-bridge group 413 and the third arrester 412, $U_i$ indicates an affordable voltage of each of the fifth IGBTs.

Optionally, in a case that the MMC and/or direct current line in the MMC-HVDC system need to be isolated, after the MMC and/or direct current line to be isolated is isolated from the MMC-HVDC system by controlling the direct current breaker 400 to be in a turned-on state, and controlling the current transfer switch 200 and the first isolation switch 100 connected to the MMC or direct current lines to be respectively turned off and switched off, the direct current breaker 400 may be turned off, i.e., all of the third IGBTs in the direct current breaker 400 may be turned off when it is detected that the first isolation switch 100 is completely turned off, such that remaining redundancy electric energy is further discharged and flows out via the third arrester 412 of the direct current breaker 400.

Optionally, referring to Figure 1, the isolation device for a direct current side of the MMC-HVDC system according to the embodiment of the present disclosure may further include a direct current bus 700, where the direct current breaker 400 may be connected to all of the first isolation switches 100 via the direct current bus 700.

With the isolation device for a direct current side of the MMC-HVDC system according to the embodiment of the present disclosure, the MMC and multiple direct current lines can be isolated from the MMC-HVDC system by using only one direct current breaker. A cost of each of the multiple current transfer switches connected to the MMC and each direct current line is lower than that of the direct current breaker, thereby saving an investment cost of the power grid to a degree.

An MMC-HVDC system according to an embodiment of the present disclosure is introduced hereinafter. The MMC-HVDC system described in the following includes the above described isolation device for a direct current side of an MMC-HVDC system.

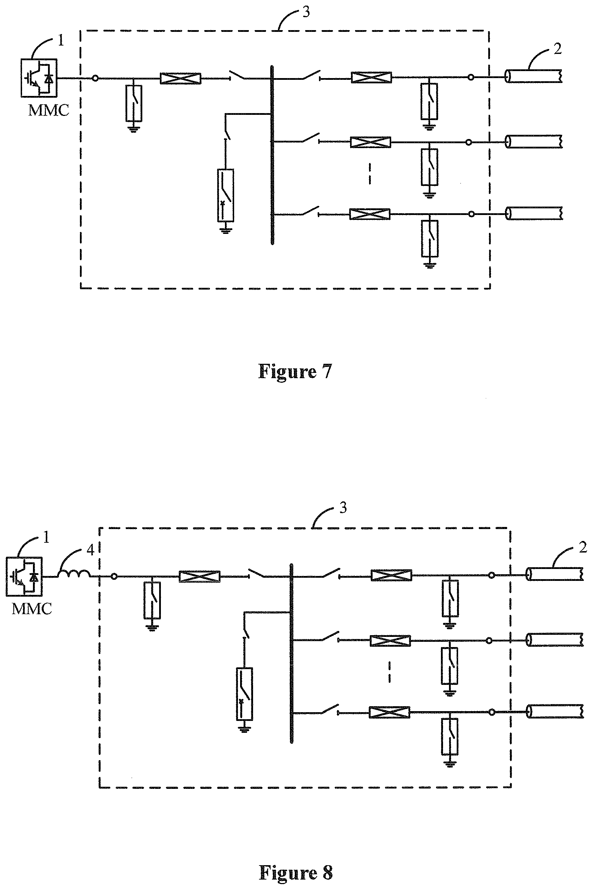

Figure 7 is a schematic structural diagram of an MMC-HVDC system according to an embodiment of the present disclosure. Referring to Figure 7, the MMC-HVDC system may include an MMC1, direct current lines 2 and an isolation device 3. Both the MMC1 and the direct current lines 2 are connected to input and output terminals of the isolation device 3.

Generally, each MMC-HVDC system includes one MMC1 and multiple direct current lines, and the MMC1 is connected to all of the direct current lines 2. When the MMC-HVDC system works normally, the MMC1 converts an alternating current into a direct current and outputs the direct current to the direct current lines 2, and the direct current lines 2 transfer the received direct current. Alternatively, the direct current lines 2 transfer direct current to the MMC1, and then the MMC1 converts the received direct current into an alternating current and outputs the alternating current to an alternating current side of the system.

Both the MMC1 and the direct current lines 2 are connected to the input and output terminals of the isolation device 3. After the MMC1 is connected to the direct current lines 2 via the isolation device 3 and the direct current breaker of the isolation device 3 is turned on, and a current transfer switch of the isolation device 3 is turned off and a first isolation switch connected to the turned-off current transfer switch is switched off, redundant electric energy of the MMC-HVDC flows out from the direct current breaker of the isolation device 3, and the MMC1 or the direct current line 2 corresponding to the turned-off current transfer switch is isolated from the MMC-HVDC system.

That is, in a case that the MMC and/or direct current line in the MMC-HVDC system need to be isolated, for example, a fault occurs in the MMC and/or direct current line in the MMC-HVDC system or the MMC and/or direct current line in the MMC-HVDC system need to be overhauled, the direct current breaker of the isolation device 3 may be turned on and a current transfer switch and a first isolation switch corresponding to the MMC1 and/or the direct current line 2 to be isolated in the isolation device 3 are turned off and switched off respectively, such that the MMC1 and/or the direct current line 2 to be isolated is physically isolated from the MMC-HVDC system, and redundant electric energy of the MMC-HVDC system flows out from the direct current breaker of the isolation device 3, so as to isolate the MMC1 and/or the direct current line 2 to be isolated from the MMC-HVDC system.

Optionally, Figure 8 shows another schematic structural diagram of the MMC-HVDC system according to an embodiment of the present disclosure. Referring to Figure 8, the MMC-HVDC system may further include a smoothing reactor 4. The MMC1 may be connected to the input and output terminals of the isolation device 3 via the smoothing reactor 4. By using the smoothing reactor 4, ripple of the direct current flowing through the smoothing reactor 4 can be restrained, and increasing of short-circuit current can be restrained.

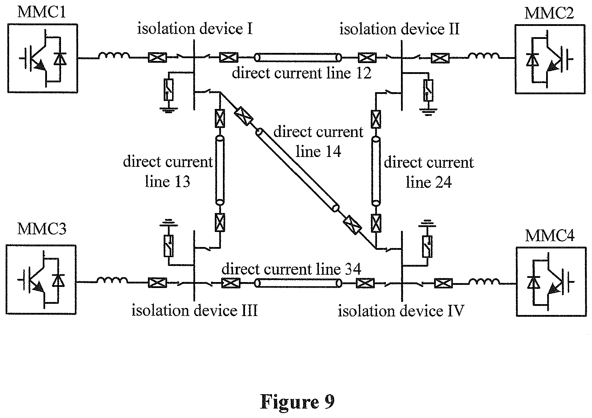

In a multi-terminal MMC-HVDC system, i.e., a direct current power transmission system using two or more MMCs, such as a direct current power transmission system using four MMCs according to an embodiment of the present disclosure shown in Figure 9, each of the MMCs corresponds to one MMC-HVDC system. Referring to Figure 9, the direct current power transmission system using four MMCs includes four MMCs, four isolation devices and five direct current lines. Each of the MMCs is connected to one of the isolation devices, and each of the isolation devices is connected to all of the direct current lines in the MMC-HVDC system where the isolation device is located.

In a case that the direct current power transmission system using four MMCs works normally, i.e., none of the MMCs and direct current lines in the system needs to be isolated, each of the first isolation switches in the isolation devices in the system is in a switched-on state, each of the current transfer switches in the isolation devices is in a turned-on state and each of the direct current breakers in the isolation devices is in a turned-off state. In addition, each of the second isolation switches is in a switched-on state, and each of the auxiliary discharging switches of the auxiliary discharging branches is in a turned-off state.

Referring to Figure 9, when the direct current power transmission system using four MMCs is in a fault or needs to be overhauled, for example, when a direct current line 12 in the direct current power transmission system using four MMCs is in a fault, both an isolation device I and an isolation device II need to perform the isolation to isolate the direct current line 12 from the MMC-HVDC systems where the isolation device I and the isolation device II are located, thereby isolating the direct current line 12 from the direct current power transmission system. Taking one of the two isolation devices as an example, the direction current line 12 in a fault may be isolated from the MMC-HVDC system where the isolation device is located by turning off the direct current breaker in the isolation device, then turning off the current transfer switch, and switching off the first isolation switch connected to the turned-off current transfer switch when a current flowing through the turned-off current transfer switch is zero, such that redundant electric energy of an MMC-HVDC system where the isolation device is located flows out from the direct current breaker and the auxiliary discharging branch.

In a case that the direct current line 12 is determined to be isolated, the auxiliary discharging switch of the auxiliary discharging branch and the direct current breaker in the isolation device may both be turned on, such that the auxiliary discharging branch assists the direct current breaker to discharge redundant electric energy. After it is detected that the first isolation switch is completely switched off, the direct current breaker may be controlled to be turned off, such that remaining redundant electric energy is further discharged and flows out via the third arrester of the direct current breaker. When a current flowing through the direct current breaker is zero, the second isolation switch of the isolation device may be switched off, such that the redundant current is further discharged and flows out.

With the MMC-HVDC system according to the embodiment of the present disclosure, the MMC and multiple direct current lines can be isolated from the MMC-HVDC system by configuring only one isolation device for each MMC and only one direct current breaker for each isolation device. The cost of each of the multiple current transfer switches connected to the MMC and each direct current line is lower than that of the direct current breaker, thereby saving an investment cost of the power grid to a degree.

An isolation method for a direct current side of an MMC-HVDC system is introduced according to an embodiment of the present disclosure hereinafter. The isolation method for a direct current side of an MMC-HVDC system described in the following is based on the MMC-HVDC system described above. That is, the isolation method for a direct current side of an MMC-HVDC system is applicable to the MMC-HVDC system, to isolate an MMC and/or direct current line to be isolated in the MMC-HVDC system from the MMC-HVDC system.

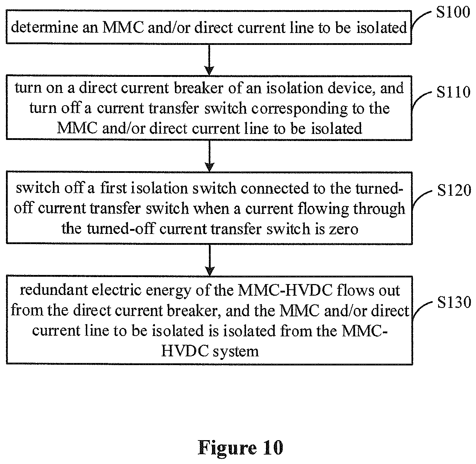

Figure 10 is a flowchart of an isolation method for a direct current side of an MMC-HVDC system according to an embodiment of the present disclosure. Referring to Figure 10, the isolation method includes step S100 to step S130 in the following.

In step S100, an MMC and/or direct current line to be isolated is determined.

When a fault occurs in an MMC and/or direct current line in the MMC-HVDC system or the MMC and/or direct current line in the MMC-HVDC system need to be overhauled, the MMC and/or direct current line in the MMC-HVDC system need to be isolated. In isolating the MMC and/or direct current line in the MMC-HVDC system, the MMC and/or direct current line to be isolated need to be determined firstly.

In a case that only the MMC needs to be isolated, the component to be isolated is determined as the MMC. In a case of a multi-terminal MMC-HVDC, it needs to determine which MMC or MMCs are to be isolated. In a case that only a direct current line needs to be isolated, it needs to determine which direct current line or lines are to be isolated. In a case that both the MMC and a direct current line need to be isolated, it needs to determine which MMC or MMCs and which direct current line or lines are to be isolated.

In step S110, the direct current breaker of an isolation device is turned on, and the current transfer switch corresponding to the MMC and/or direct current line to be isolated is turned off.

After the MMC and/or direct current line to be isolated is determined, the direct current breaker in the isolation device connected to the MMC and/or direct current line to be isolated is turned on, and the current transfer switch corresponding to the MMC and/or direct current line to be isolated in the isolation device is turned off.

In order to ensure that redundant electric energy can flow out in time, the direct current breaker of the isolation device should be turned on firstly, and then the current transfer switch corresponding to the MMC and/or direct current line to be isolated is turned off.

In step S120, the first isolation switch connected to the turned-off current transfer switch is switched off when a current flowing through the turned-off current transfer switch is zero.

After the current transfer switch in the isolation device is turned off, the current flowing through the turned-off current transfer switch is reduced gradually. The first isolation switch connected to the turned-off current transfer switch is switched off when the current flowing through the turned-off current transfer switch is zero.

In step S130, redundant electric energy of the MMC-HVDC flows out from the direct current breaker and the MMC and/or direct current line to be isolated is isolated from the MMC-HVDC system.

After the direct current breaker is turned on, and the current transfer switch and the isolation switch which are connected to the MMC or direct current line to be isolated are turned off and switched off respectively, redundant electric energy of the MMC-HVDC flows out from the direct current breaker, and the MMC and/or direct current line to be isolated is isolated from the MMC-HVDC system where the MMC and/or direct current line is located.

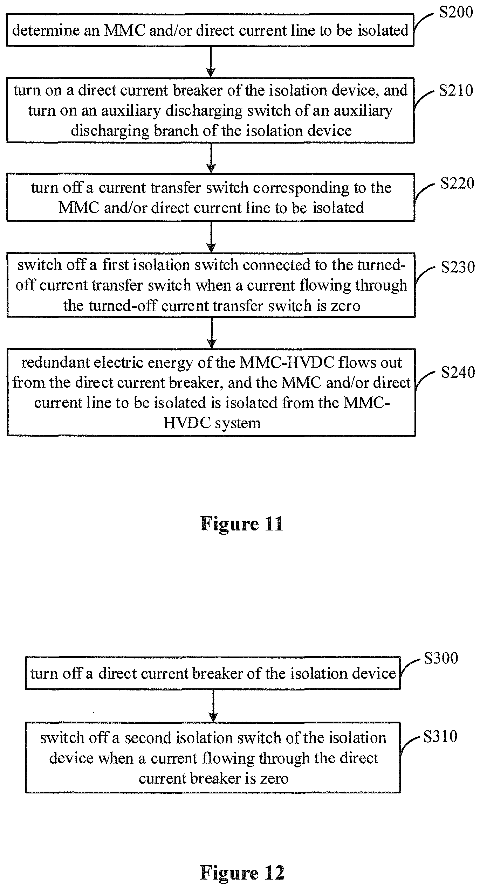

Optionally, Figure 11 shows another flowchart of the isolation method for a direct current side of an MMC-JVDC system according to an embodiment of the present disclosure. Referring to Figure 11, the isolation method may include step S200 to step S240 in the following.

In step S200, an MMC and/or direct current line to be isolated is determined.

In step S210, the direct current breaker of the isolation device is turned on, and an auxiliary discharging switch of an auxiliary discharging branch of the isolation device is turned on.

In a case that the isolation device includes an auxiliary discharging branch assisting the direct current breaker to discharge redundant electric energy, the auxiliary discharging switch in the auxiliary discharging branch and the direct current breaker should be both turned on after the MMC and/or direct current line to be isolated is determined, such that the auxiliary discharging branch 600 assists the direct current breaker 400 to discharge redundant electric energy.

In step S220, a current transfer switch corresponding to the MMC and/or direct current line to be isolated is turned off.

Similarly, in order to ensure that redundant electric energy can flow out in time, the auxiliary discharging switch in the auxiliary discharging branch and the direct current breaker in the isolation device should be turned on first, and then the current transfer switch corresponding to the MMC and/or direct current line to be isolated is turned off.

In step S230, the first isolation switch connected to the turned-off current transfer switch is switched off when a current flowing through the turned-off current transfer switch is zero.

In step S240, redundant electric energy of the MMC-HVDC flows out from the direct current breaker and the MMC and/or direct current line to be isolated is isolated from the MMC-HVDC system.

Optionally, Figure 12 shows a flowchart of a method for further discharging redundant electric energy in the isolation method according to an embodiment of the present disclosure. Referring to Figure 12, the method for further discharging redundant electric energy may include step S300 and step S310 in the following.

In step S300, the direct current breaker of the isolation device is turned off.

After it is detected that the first isolation switch in the isolation device is completely switched off, the direct current breaker may be controlled to be turned off, such that remaining redundant electric energy is further discharged and flows out via the arrester of the direct current breaker.

In step S310, a second isolation switch of the isolation device is switched off when a current flowing through the direct current breaker is zero.

When the current flowing through the direct current breaker is zero, i.e., no current flows through the second IGBT group and the third arrester in the direct current breaker, the second isolation switch of the isolation device may be switched off, such that redundant current is further discharged and flows out.

The isolation method according to the embodiment of the present disclosure is applied to the MMC-HVDC system, specifically to a direct current side of the MMC-HVDC system. The MMC and multiple direct current lines can be isolated from the MMC-HVDC system by configuring only one isolation device for each MMC and only one direct current breaker each isolation device. The cost of each of the multiple current transfer switches connected to the MMC and each direct current line is lower than that of the direct current breaker, thereby saving an investment cost of the power grid to a degree.

The embodiments of the description are described in a progressive manner, and each embodiment places emphasis on the difference from other embodiments. The embodiments can be referred to from one another for the same or similar parts. For the device disclosed in the embodiments, the corresponding descriptions are relatively simple because the device corresponds to the method disclosed in the embodiments, and reference may be made to the description of the method for the relevant portions.

According to the above description of the disclosed embodiments, those skilled in the art can implement or practice the present disclosure. Many changes to these embodiments are apparent for those skilled in the art. General principles defined herein may be implemented with other embodiments without departing from the scope of the present disclosure, as specified by the appended claims.

**Claims**

1. An isolation device for a direct current side of an MMC-HVDC system comprising an MMC (1) and a direct current line (2), the isolation device comprising first isolation switches (100), current transfer switches (200), input and output terminals (300) and a direct current breaker (400),

   wherein the input and output terminals (300) are connectable to the MMC (1) and the direct current line (2),
   wherein one terminal of the direct current breaker (400) is grounded and the other terminal of the direct current breaker (400) is connected to all of the first isolation switches (100); each of the first isolation switches (100) is connected to one of the input and output terminals (300) via one of the current transfer switches (200), so as to realize that each of the first isolation switches (100) is connectable to the MMC (1) or the direct current line (2) of the MMC-HVDC system; each of the current transfer switches (200) comprises a first arrester (220) and a first IGBT group (210) connected to the first arrester (220) in parallel, or a first arrester (220) and an H-bridge group (230) connected to the first arrester (220) in parallel, the first IGBT group (210) comprises N first IGBTs each having an anti-parallel diode and N second IGBTs each having an anti-parallel diode, the first IGBTs are connected to the second IGBTs in anti-series, the H-bridge group (230) comprises N H-bridge circuits (231) connected in series to each other, and each of the H-bridge circuits (231) comprises one first capacitor and four third IGBTs each having an anti-parallel diode; and
   $N \geq kU_0/U_1$, $N \in Z$, where k indicates a redundancy factor, $U_0$ indicates a protection level of the first arrester (220), and $U_1$ indicates an affordable voltage of each of the first IGBTs and the second IGBTs or an affordable voltage of each of the third IGBTs.

2. The isolation device according to claim 1, further comprising: a second isolation switch (500), wherein the direct current breaker (400) is connected to all of the first isolation switches (100) via the second isolation switch (500).

3. The isolation device according to claim 1, further comprising: auxiliary discharging branches (600), wherein one terminal of each of the auxiliary discharging branches (600) is grounded, and the other terminal of the auxiliary discharging branch (600) is connected to one of the input and output terminals (300); and
   each of the auxiliary discharging branches (600) comprises an auxiliary discharging switch (610) and a resistor (620) connected in series, the auxiliary discharging switch (610) comprises a thyristor group (611) and a second arrester (612) connected in parallel to each other, the thyristor group (611) comprises one or more thyristors connected in series to each other, and a current flows from a positive electrode of each of the thyristors to a negative electrode of the thyristor when the auxiliary discharging switch (610) is in a turned-on state.

4. The isolation device according to claim 1, wherein

   the direct current breaker (400) comprises one or more switching units (410) connected in series to each other, the switching unit (410) comprises a third arrester (412) and one of a second IGBT group (411) and a half H-bridge group (413) connected to the third arrester (412) in parallel, the second IGBT group (411) comprises one or more fourth IGBTs each having an anti-parallel diode and connected in series to each other, the half H-bridge group (413) comprises one or more half H-bridge circuits connected in series to each other, each of the half H-bridge circuits comprises one second capacitor and two fifth IGBTs each having an anti-parallel diode, and a current flows from a collector of each of the fourth IGBTs or the fifth IGBTs to an emitter of the fourth IGBT or the fifth IGBT when the direct current breaker (400) is in a turned-on state;
   the number of the switching units (410) is denot-

   $$N_s \geq \frac{kk_1 U_{dc}}{U_e}$$

   ed as , $N_S \in Z$; and
   the number of the fourth IGBTs or the half H-

   $$N_e \geq \frac{U_e}{U_i}$$

   bridge circuits is denoted as , $N_e \in Z$, where
   k indicates a redundancy factor, $k_1$ indicates an over voltage affordable factor, $U_{dc}$ indicates a direct current voltage, $U_e$ indicates a protection level of the third arrester (412), and $U_i$ indicates an affordable voltage of each of the fourth IGBTs or the fifth IGBTs.

**5.** The isolation device according to claim 1, further comprising: a direct current bus (700), wherein the direct current breaker (400) is connected to all of the first isolation switches (100) via the direct current bus (700).

**6.** An MMC-HVDC system, comprising: an MMC (1), a direct current line (2) and the isolation device (3) according to any one of claims 1 to 5,

wherein the MMC (1) and the direct current line (2) each are connected to one of the input and output terminals (300) of the isolation device (3); and
when the direct current breaker (400) of the isolation device is turned on and the current transfer switch (200) of the isolation device is turned off and the first isolation switch (100) connected to the turned-off current transfer switch (200) is switched off, redundant electrical energy of the MMC-HVDC flows out from the direct current breaker (400), and the MMC (1) or the direct current line (2) corresponding to the turned-off current transfer switch (200) is isolated from the MMC-HVDC system.

**7.** The MMC-HVDC system according to claim 6, further comprising: a smoothing reactor (4), wherein the MMC (1) is connected to the input and output terminal (300) of the isolation device via the smoothing reactor (4).

**8.** An isolation method for a direct current side of the MMC-HVDC system according to claim 6 or 7 comprises:

determining an MMC (1) and/or direct current line (2) to be isolated;
turning on the direct current breaker (400) of the isolation device and turning off the current transfer switch (200) corresponding to the MMC (1) and/or direct current line (2) to be isolated; and switching off the first isolation switch (100) connected to the turned-off current transfer switch (200) after a current flowing through the turned-off current transfer switch (200) is zero, wherein redundant electrical energy of the MMC-HVDC system flows out from the direct current breaker (400), and the MMC (1) and/or direct current line (2) to be isolated is isolated from the MMC-HVDC system.

**9.** The isolation method according to claim 8, wherein after determining the MMC (1) and/or direct current line (2) to be isolated, the isolation method further comprises: turning on the auxiliary discharging switch (600) of the auxiliary discharging branch of the isolation device, and turning off the current transfer switch (200) corresponding to the MMC (1) and/or direct current line (2) to be isolated after the auxiliary discharging switch (600) of the auxiliary discharging branch of the isolation device and the direct current breaker (400) of the isolation device each are turned on.

**10.** The isolation method according to claim 8, wherein after the MMC (1) and/or direct current line (2) to be isolated is isolated from the MMC-HVDC system, the isolation method further comprises:

turning off the direct current breaker (400) of the isolation device; and
switching off a second isolation switch (500) of the isolation device when a current flowing through the direct current breaker (400) is zero.

**Patentansprüche**

**1.** Isolierungsvorrichtung für eine Gleichstromseite eines MMC-HVDC-Systems mit einem MMC (1) und einer Gleichstromleitung (2), wobei die Isolierungsvorrichtung erste Isolierungsschalter (100), Stromübertragungsschalter (200), Eingangs- und Ausgangsanschlüsse (300) und einen Gleichstromunterbrecher (400) umfasst,

wobei die Eingangs- und Ausgangsanschlüsse (300) mit dem MMC (1) und der Gleichstromleitung (2) verbindbar sind,
wobei ein Anschluss des Gleichstromunterbrechers (400) geerdet ist und der andere Anschluss des Gleichstromunterbrechers (400) mit allen ersten Isolierungsschalter (100) verbunden ist; wobei jeder der ersten Isolierungsschalter (100) über einen der Stromübertragungsschalter (200) mit einem der Eingangs- und Ausgangsanschlüssen (300) verbunden ist, um zu realisieren, dass jeder der ersten Isolierungsschalter (100) mit dem MMC (1) oder der Gleichstromleitung (2) des MMC-HVDC-Systems verbunden werden kann;
wobei jeder der Stromübertragungsschalter (200) einen ersten Ableiter (220) und eine erste IGBT-Gruppe (210), die mit dem ersten Ableiter (220) parallel verbunden ist, oder einen ersten Ableiter (220) und eine H-Brückengruppe (230), die mit dem ersten Ableiter (220) parallel verbunden ist, umfasst, wobei die erste IGBT-Gruppe (210) N erste IGBTs, die jeweils eine antiparallele Diode aufweisen, und N zweite IGBTs, die jeweils eine antiparallele Diode aufweisen, umfasst, wobei die ersten IGBTs mit den zweiten IGBTs antireihengeschaltet sind, wobei die H-Brückengruppe (230) N H-Brückenschaltungen (231) umfasst, die miteinander in Reihe geschaltet sind, und wobei jede der H-Brückenschaltungen (231) einen ersten Kondensator und vier dritte IGBTs umfasst, die jeweils eine antiparallele Diode aufweisen; und

wobei $N \geq kU_0/U_1$, $N \in Z$, wobei k einen Redundanzfaktor, $U_0$ ein Schutzniveau des ersten Ableiters (220) und $U_1$ eine tragbare Spannung jedes der ersten IGBTs und der zweiten IGBTs oder eine tragbare Spannung jedes der dritten IGBTs angibt.

2. Isolierungsvorrichtung nach Anspruch 1, ferner umfassend: einen zweiten Isolierungsschalter (500), wobei der Gleichstromunterbrecher (400) über den zweiten Isolierungsschalter (500) mit allen ersten Isolierungsschalter (100) verbunden ist.

3. Isolierungsvorrichtung nach Anspruch 1, ferner umfassend: Hilfsentladungszweige (600), wobei ein Anschluss jedes der Hilfsentladungszweige (600) geerdet ist und der andere Anschluss des Hilfsentladungszweigs (600) mit einem der Eingangs- und Ausgangsanschlüsse (300) verbunden ist; und wobei jeder der Hilfsentladungszweige (600) einen Hilfsentladungsschalter (610) und einen in Reihe geschalteten Widerstand (620) umfasst, wobei der Hilfsentladungsschalter (610) eine Thyristorgruppe (611) und einen zweiten Ableiter (612) umfasst, die parallel zueinander geschaltet sind, wobei die Thyristorgruppe (611) einen oder mehrere Thyristoren umfasst, die miteinander in Reihe geschaltet sind, und wobei ein Strom von einer positiven Elektrode jedes der Thyristoren zu einer negativen Elektrode des Thyristors fliesst, wenn sich der Hilfsentladungsschalter (610) in einem eingeschalteten Zustand befindet.

4. Isolierungsvorrichtung nach Anspruch 1, wobei

der Gleichstromunterbrecher (400) eine oder mehrere Schalteinheiten (410) umfasst, die miteinander in Reihe geschaltet sind, wobei die Schalteinheit (410) einen dritten Ableiter (412) und entweder eine zweite IGBT-Gruppe (411) oder eine halbe H-Brückengruppe (413) umfasst, die mit dem dritten Ableiter (412) parallel geschaltet sind, wobei die zweite IGBT-Gruppe (411) einen oder mehrere vierte IGBTs umfasst, die jeweils eine Antiparallel-Diode aufweisen und miteinander in Reihe geschaltet sind, wobei die halbe H-Brückengruppe (413) eine oder mehrere halbe H-Brückenschaltungen umfasst, die miteinander in Reihe geschaltet sind, wobei jede der halben H-Brückenschaltungen einen zweiten Kondensator und zwei fünfte IGBTs umfasst, die jeweils eine antiparallele Diode aufweisen, und wobei ein Strom von einem Kollektor jedes der vierten IGBTs oder der fünften IGBTs zu einem Emitter des vierten IGBTs oder des fünften IGBTs fliesst, wenn der Gleichstromunterbrecher (400) in einem eingeschalteten Zustand ist;
wobei die Anzahl der Schalteinheiten (410) als

$$N_s \geq \frac{kk_1 U_{dc}}{U_e}$$

bezeichnet wird , $N_S \in Z$; und
wobei die Anzahl der vierten IGBTs oder der hal-

$$N_e \geq \frac{U_e}{U_i}$$

ben H-Brückenschaltungen als bezeichnet wird, $N_e \in Z$, wobei
k bezeichnet einen Redundanzfaktor, $k_1$ bezeichnet einen Überspannungstragbarkeitsfaktor, $U_{dc}$ bezeichnet eine Gleichspannung, $U_e$ bezeichnet ein Schutzniveau des dritten Ableiters (412), und $U_i$ bezeichnet eine tragbare Spannung jedes der vierten IGBTs oder der fünften IGBTs.

5. Isolierungsvorrichtung nach Anspruch 1, ferner umfassend: einen Gleichstrombus (700), wobei der Gleichstromunterbrecher (400) mit allen ersten Isolierungsschalter (100) über den Gleichstrombus (700) verbunden ist.

6. MMC-HVDC-System, umfassend: eine MMC (1), eine Gleichstromleitung (2) und die Isolierungsvorrichtung (3) nach einem der Ansprüche 1 bis 5,

wobei die MMC (1) und die Gleichstromleitung (2) jeweils mit einem der Eingangs- und Ausgangsanschlüsse (300) der Isoliervorrichtung (3) verbunden sind; und
wobei, wenn der Gleichstromunterbrecher (400) der Isolierungsvorrichtung eingeschaltet und der Stromübertragungsschalter (200) der Isolierungsvorrichtung ausgeschaltet wird und der erste Isolierungsschalter (100), der mit dem ausgeschalteten Stromübertragungsschalter (200) verbunden ist, ausgeschaltet wird, redundante elektrische Energie der MMC-HVDC aus dem Gleichstromunterbrecher (400) abfliesst, und die MMC (1) oder die Gleichstromleitung (2), die dem ausgeschalteten Stromübertragungsschalter (200) entspricht, wird vom MMC-HVDC-System getrennt.

7. MMC-HVDC-System nach Anspruch 6, ferner umfassend: eine Glättungsdrossel (4), wobei die MMC (1) über die Glättungsdrossel (4) mit dem Eingangs- und Ausgangsanschluss (300) der Isolierungsvorrichtung verbunden ist.

**8.** Isolierungsverfahren für eine Gleichstromseite des MMC-HVDC-Systems nach Anspruch 6 oder 7 umfasst:

Bestimmen einer zu trennenden MMC (1) und/oder Gleichstromleitung (2);
Einschalten des Gleichstromunterbrechers (400) der Isolierungsvorrichtung und Ausschalten des Stromübertragungsschalters (200) entsprechend der zu trennenden MMC (1) und/oder Gleichstromleitung (2); und
Ausschalten des ersten Isolierungsschalters (100), der mit dem ausgeschalteten Stromübertragungsschalter (200) verbunden ist, nachdem ein durch den ausgeschalteten Stromübertragungsschalter (200) fliessender Strom Null ist, wobei redundante elektrische Energie des MMC-HVDC-Systems aus dem Gleichstromunterbrecher (400) abfliesst und die zu trennende MMC (1) und/oder Gleichstromleitung (2) vom MMC-HVDC-System getrennt wird.

**9.** Isolierungsverfahren nach Anspruch 8, wobei das Isolierungsverfahren nach der Bestimmung der zu trennenden MMC (1) und/oder Gleichstromleitung (2) ferner umfasst: Einschalten des Hilfsentladeschalters (600) des Hilfsentladezweigs der Isolierungsvorrichtung und Ausschalten des Stromübertragungsschalters (200), der der zu trennenden MMC (1) und/oder Gleichstromleitung (2) entspricht, nachdem der Hilfsentladeschalter (600) des Hilfsentladezweigs der Isolierungsvorrichtung und der Gleichstromunterbrecher (400) der Isolierungsvorrichtung jeweils eingeschaltet sind.

**10.** Isolierungsverfahren nach Anspruch 8, wobei das Isolierungsverfahren, nachdem die zu isolierende MMC (1) und/oder Gleichstromleitung (2) von dem MMC-HVDC-System isoliert ist, weiterhin umfasst:

Ausschalten des Gleichstromunterbrechers (400) der Isolieungsrvorrichtung; und
Ausschalten eines zweiten Isolierungsschalters (500) der Isolierungsvorrichtung, wenn ein durch den Gleichstromunterbrecher (400) fliessender Strom Null ist.

## Revendications

**1.** Un dispositif d'isolation pour un côté courant continu d'un système MMC-HVDC, comprenant un convertisseur modulaire multi-niveaux MMC (1) et une ligne de courant continu (2), le dispositif d'isolation comprenant des premiers commutateurs d'isolation (100), des commutateurs de transfert de courant (200), des bornes d'entrée et de sortie (300) et un disjoncteur de courant continu (400),

dans lequel les bornes d'entrée et de sortie (300) peuvent être connectées au convertisseur modulaire multi-niveaux MMC (1) et la ligne de courant continu (2),
dans lequel une borne du disjoncteur de courant continu (400) est mise à la terre et l'autre borne du disjoncteur de courant continu (400) est connectée à tous les premiers commutateurs d'isolation (100); chacun des premiers commutateurs d'isolation (100) est connecté à l'une des bornes d'entrée et de sortie (300) via l'un des commutateurs de transfert de courant (200), de sorte à assurer que chacun des premiers commutateurs d'isolation (100) puisse être connecté au convertisseur modulaire multi-niveaux MMC (1) ou la ligne de courant continu (2) du système MMC-HVDC;
chacun des commutateurs de transfert de courant (200) comprend un premier parasurtenseur (220) et l'un d'un premier groupe IGBT (210) connecté au premier parasurtenseur (220), ou un premier parasurtenseur (220) et un groupe de ponts en H (230) connectés au premier parasurtenseur (220) en parallèle, le premier groupe d'IGBT (210) comprend N premiers IGBTs ayant chacun une diode anti-parallèle et N seconds IGBTs ayant chacun une diode anti-parallèle, les premiers IGBTs sont connectés aux seconds IGBTs en anti-série, le groupe de ponts en H (230) comprend N circuits de pont en H (231) connectés en série les uns aux autres, et chacun des circuits de pont en H (231) comprend un premier condensateur et quatre troisièmes IGBTs ayant chacun une diode anti-parallèle ; et
$N \geq kU_0/U_1$, $N \in Z$, où k indique un facteur de redondance, $U_0$ indique un niveau de protection du premier parasurtenseur (220), et $U_1$ indique une tension abordable de chacun des premiers IGBTs et des deuxièmes IGBTs ou une tension abordable de chacun des troisièmes IGBTs.

**2.** Le dispositif d'd'isolation selon la revendication 1, comprenant en outre : un deuxième commutateur d'isolation (500), dans lequel le disjoncteur de courant continu (400) est connecté à tous les premiers commutateurs d'isolation (100) via le deuxième commutateur d'isolation (500).

**3.** Le dispositif d'd'isolation selon la revendication 1, comprenant en outre: des branches de décharge auxiliaires (600), dans lequel une borne de chacun des branches de décharge auxiliaires (600) est mise à la terre, et l'autre borne de la branche de décharge auxiliaire (600) est connectée à l'une des bornes d'entrée et de sortie (300) ; et
chacune des branches auxiliaires de décharge (600) comprend un commutateur de décharge auxiliaire (610) et une résistance (620) connectés en série, le commutateur de décharge auxiliaire (610) comprend un groupe de thyristors (611) et un deuxième parasurtenseur (612) connectés en parallèle l'un à l'autre, le groupe de thyristors (611) comprend un ou plusieurs thyristors connectés en série l'un à l'autre, et un courant circule d'une électrode positive de chacun des thyristors vers une électrode négative du thyristor lorsque le commutateur de décharge auxiliaire (610) est dans un état passant.

4. Le dispositif d'd'isolation selon la revendication 1, dans lequel

le disjoncteur de courant continu (400) comprend une ou plusieurs unités de commutation (410) connectées en série les unes aux autres, l'unité de commutation (410) comprend un troisième parasurtenseur (412) et l'un d'un deuxième groupe IGBT (411) et d'un groupe en demi-pont en H (413) connectés au troisième parasurtenseur (412) en parallèle, le deuxième groupe d'IGBT (411) comprend un ou plusieurs quatrièmes IGBTs ayant chacun une diode anti-parallèle et connectés en série les uns aux autres, le groupe en demi-pont en H (413) comprend un ou plusieurs circuits en demi-pont en H connectés en série les uns aux autres, chacun des circuits en demi-pont en H comprend un deuxième condensateur et deux cinquièmes IGBTs ayant chacun une diode anti-parallèle, et un courant circule d'un collecteur de chacun des quatrièmes IGBTs ou des cinquièmes IGBTs à un émetteur du quatrième IGBT ou du cinquième IGBT lorsque le disjoncteur de courant continu (400) est dans un état passant ; le nombre d'unités de commutation est noté

$$N_s \geq \frac{k k_1 U_{dc}}{U_e}$$ , $N_S \in Z$ ; et

le nombre des quatrièmes IGBTs ou des circuits en demi-pont en H est noté $$N_e \geq \frac{U_e}{U_i}$$ , $N_e \in Z$, où k indique un facteur de redondance, $k_1$ indique un facteur abordable de surtension, $U_{dc}$ indique un tension de courant continu, $U_e$ indique un niveau de protection du troisième parasurtenseur (412), et $U_i$ indique une tension abordable de chacun des quatrièmes IGBTs ou des cinquièmes IGBTs.

5. Le dispositif d'd'isolation selon la revendication 1, comprenant en outre: un bus à courant continu (700), dans lequel le disjoncteur à courant continu (400) est connecté à tous les premiers commutateurs d'isolation (100) via le bus à courant continu (700).

6. Un système MMC-HVDC, comprenant: un MMC (1), une ligne de courant continu (2) et le dispositif d'd'isolation (3) selon l'une quelconque des revendications 1 à 5,

dans lequel le MMC (1) et la ligne de courant continu (2) sont chacun connectés à l'une des bornes d'entrée et de sortie (300) du dispositif d'd'isolation (3); et lorsque le disjoncteur de courant continu (400) du dispositif d'isolation est activé et que le commutateur de transfert de courant (200) du dispositif d'isolation est désactivé et que le premier commutateur d'isolation (100) connecté au commutateur de transfert de courant (200) désactivé est désactivé, l'énergie électrique redondante du MMC-HVDC s'écoule du disjoncteur de courant continu (400), et le MMC (1) ou la ligne de courant continu (2) correspondant au commutateur de transfert de courant (200) désactivé est isolé du système MMC-HVDC.

7. Le système MMC-HVDC selon la revendication 6, comprenant en outre: une réactance de lissage (4), dans laquelle le MMC est connecté à la borne d'entrée et de sortie (300) du dispositif d'isolation via la réactance de lissage (4).

8. Un procédé d'isolation pour un côté courant continu du système MMC-HVDC selon la revendication 6 ou 7, comprenant :

déterminer un MMC (1) et/ou une ligne de courant continu (2) à isoler ; activer le disjoncteur de courant continu (400) du dispositif d'd'isolation et désactiver le commutateur de transfert de courant (200) correspondant au MMC (1) et/ou à la ligne de courant continu (2) à isoler ; et éteindre le premier commutateur d'isolation (100) connecté au commutateur de transfert de courant (200) désactivé après qu'un courant circulant à travers le commutateur de transfert de courant (200) désactivé est nul, dans lequel l'énergie électrique redondante du système MMC-HVDC s'écoule du disjoncteur de courant continu (400), et le MMC (1) et/ou la ligne de courant continu (2) à isoler est isolé du système MMC-HVDC.

9. Le procédé d'isolation selon la revendication 8, dans lequel, après avoir déterminé le MMC (1) et/ou la ligne de courant continu (2) à isoler, le procédé d'isolation comprend en outre : l'activation du commutateur de décharge auxiliaire (600) de la branche de décharge auxiliaire du dispositif d'isolation, et la désactivation du commutateur de transfert de courant (200) correspondant au MMC (1) et/ou à la ligne de courant continu (2) à isoler après que le commutateur de décharge auxiliaire (600) de la branche de décharge auxiliaire du dispositif d'isolation et le disjoncteur de courant continu (400) du dispositif d'isolation ont chacun été activés.

10. Le procédé d'isolation selon la revendication 8, dans lequel après que la MMC (1) et/ou la ligne de courant continu (2) à isoler est isolée du système MMC-HVDC, le procédé d'd'isolation comprend en outre :

désactiver le disjoncteur de courant continu (400) du dispositif d'd'isolation ; et
éteindre un deuxième commutateur d'isolation (500) du dispositif d'd'isolation lorsqu'un courant circulant à travers le disjoncteur à courant continu (400) est nul.

**Figure 1**

**Figure 2**

**Figure 3**

**Figure 4**

**Figure 5**

**Figure 6**

**Figure 7**

**Figure 8**

**Figure 9**

determine an MMC and/or direct current line to be isolated ⟋ S100

↓

turn on a direct current breaker of an isolation device, and turn off a current transfer switch corresponding to the MMC and/or direct current line to be isolated ⟋ S110

↓

switch off a first isolation switch connected to the turned-off current transfer switch when a current flowing through the turned-off current transfer switch is zero ⟋ S120

↓

redundant electric energy of the MMC-HVDC flows out from the direct current breaker, and the MMC and/or direct current line to be isolated is isolated from the MMC-HVDC system ⟋ S130

**Figure 10**

| determine an MMC and/or direct current line to be isolated | S200 |

↓

| turn on a direct current breaker of the isolation device, and turn on an auxiliary discharging switch of an auxiliary discharging branch of the isolation device | S210 |

↓

| turn off a current transfer switch corresponding to the MMC and/or direct current line to be isolated | S220 |

↓

| switch off a first isolation switch connected to the turned-off current transfer switch when a current flowing through the turned-off current transfer switch is zero | S230 |

↓

| redundant electric energy of the MMC-HVDC flows out from the direct current breaker, and the MMC and/or direct current line to be isolated is isolated from the MMC-HVDC system | S240 |

**Figure 11**

| turn off a direct current breaker of the isolation device | S300 |

↓

| switch off a second isolation switch of the isolation device when a current flowing through the direct current breaker is zero | S310 |

**Figure 12**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104767185 A
- US 9000623 B2